# EUROPEAN PATENT SPECIFICATION

(11) **EP 2 518 285 B1**
(45) Date of publication and mention of the grant of the patent: **10.06.2015**
(21) Application number: 10838926.3
(22) Date of filing: 17.12.2010
(51) Int. Cl.: F01L 3/06, F01L 3/20, F02F 1/18

(54) **FOUR-STROKE INTERNAL COMBUSTION ENGINE AND EXHAUST VALVE**
VIERTAKT-VERBRENNUNGSMOTOR UND ABGASVENTIL
MOTEUR À COMBUSTION INTERNE À QUATRE TEMPS ET SOUPAPE D'ÉCHAPPEMENT

(30) Priority: 21.12.2009 JP 2009289503
(43) Date of publication of application: 31.10.2012
(73) Proprietor: Kawasaki Jukogyo Kabushiki Kaisha, Kobe-shi, Hyogo 650-8670 (JP)
(72) Inventor: SAKURAI, Hideaki, Chou-ku Kobe-shi, 650-8670 Hyogo (JP); HORIE, Takashi, Chou-ku Kobe-shi, 650-8670 Hyogo (JP)
(74) Representative: Witte, Weller & Partner Patentanwälte mbB
(86) International application number: PCT/JP2010/007343
(87) International publication number: WO 2011/077686

(56) References cited:
- EP-A1- 0 091 097
- DE-A1- 19 602 720
- GB-A- 223 213
- JP-A- 2003 307 106
- JP-A- 2003 307 106
- JP-B2- 3 527 889
- JP-U- S63 164 523
- US-A- 5 823 158
- David Vizard: "Tuning BL's A-series engine", 1 June 1987 (1987-06-01), Haynes, yeovil gb, XP002713590, ISBN: 9780854294145 page 158,163,181,182,189,190,387, * the whole document *

## Description

### Technical Field

The present invention relates to a four-stroke internal combustion engine configured to reduce the wobbling of an exhaust valve, and particularly to a four-stroke internal combustion engine configured such that especially in the case of using a large exhaust valve with respect to a cylinder, damages of a valve seat by the wobbling of the exhaust valve are reduced, and an exhaust valve applied to the four-stroke internal combustion engine.

### Background Art

In a case where the internal combustion engine is designed such that the volume of a combustion chamber is increased for the purpose of improving the performance of the internal combustion engine, flame propagation, which has been optimally adjusted, becomes too slow and this may cause knocking, or the compression ratio becomes low and this may decrease the performance of the internal combustion engine. To avoid these problems, instead of changing the size of the combustion chamber, there is a method of improving the performance of the internal combustion engine by increasing the sizes of a supply valve and an exhaust valve to shorten a supply and exhaust time.

However, in a case where the diameter of the exhaust valve is increased with respect to the diameter of the cylinder, a phenomenon in which a part of a seal portion of the valve seat is worn away may occur. This increases the frequency of part replacement, and the problem of the increase in maintenance cost is caused. The present inventors have studied by utilizing, for example, a vibration displacement measurement of a valve rod and CFD analysis (Computational Fluid Dynamics). As a result, it was found that this uneven wear is caused since a force in a direction toward a wall is applied to the exhaust valve in an exhaust stroke and this causes the wobbling of the exhaust valve.

To be specific, since the exhaust valve is large with respect to the diameter of the cylinder, a gap between the outer edge of a valve umbrella of the exhaust valve and the inner wall of the cylinder narrows, and a narrow passage is formed. When a high-pressure combustion gas is discharged from the cylinder in the exhaust stroke, a narrow portion is formed at a cylinder-side end point of the narrow passage. The combustion gas becomes low in pressure after flowing through the narrow portion. Therefore, lower gas pressure is applied to a side portion of the valve umbrella, the side portion facing the narrow passage. In contrast, the pressure of the high-pressure combustion gas is applied to the side portion of the valve umbrella other than the side portion facing the narrow passage. Therefore, a moment toward the wall of the cylinder is generated on the exhaust valve.

The valve umbrella of the exhaust valve oscillates toward the wall by this force, or the valve body vibrates by this force and a resisting force generated by the stiffness of the valve rod. Thus, the valve body oscillates in such a direction that the interval between the valve umbrella and the inner wall of the cylinder becomes substantially minimum. On this account, it is estimated that a position where the exhaust valve contacts the valve seat tends to be a cylinder wall-side portion of the valve seat and the wear of the seal portion of the valve seat unevenly occurs.

The present applicants have searched patent literatures but could not find appropriate literatures regarding the wobbling phenomenon of the exhaust valve of the internal combustion engine and countermeasures against the wobbling phenomenon. PTL 1 discloses an invention in which in a diesel engine including an exhaust valve and a a supply valve, cost reduction is realized such that the exhaust valve and the supply valve are formed to have the same diameter and shape as each other so as to be compatible with each other. Japanese Laid-Open Patent Application Publication No. 2003-307106 (PTL1-) describes that by forming the surface of a head portion of each of the supply valve and the exhaust valve to have a hemisphere shape, the strength of the valve is increased, and supply air and exhaust air at the time of combustion are disturbed or stirred along the surface of the head portion in the cylinder. However, the air current along the hemispherical surface of the head portion in a combustion step becomes a three-dimensional air current in a direction crossing a top portion of the hemisphere to increase the miscibility and combustibility of a fuel and does not relate to an air current toward an opening between the exhaust valve and the valve seat in the exhaust stroke. Therefore, PTL 1 does not relate to the wobbling or vibration of the valve body.

In David Vizard: "Tuning BL's A-series engine", 1 June 1987, ISBN 9780854294145, pages 158, 163, 181, 182, 189, 190, 387, a four cycle combustion engine is disclosed.

In JP S63 164523 U the formation of a recess in a cylinder is disclosed.

In US 5 823 158 A an engine valve and a method for making the same are disclosed.

In DE 196 02 720 A1 valve is disclosed.

In EP 0 091 097 A1 an engine valve and method of producing the same are disclosed.

In GB 223 213 A improvements in light valves for internal combustion engines are disclosed.

### Disclosure of Invention

### Technical Problem

An object of the present invention is to provide a four-cycle internal combustion engine configured such that regarding a cylinder part of a diesel engine or gas engine including an exhaust valve, the wobbling of a valve body is suppressed to prevent abnormal wear and thus extend the lives of a valve seat and the valve body, the wobbling being caused by a moment generated by a gas pressure difference applied to a side portion of a valve umbrella in a region where an outer peripheral portion of the valve umbrella of the exhaust valve is close to an inner wall of the cylinder, and to provide the exhaust valve applied to the four-cycle internal combustion engine.

### Solution to Problem

To solve the above problems, a four-cycle internal combustion engine of the present invention includes: a cylinder configured such that a recess (depression) is formed on an upper edge portion of an inner wall of the cylinder , the recess being formed by depressing the inner wall so as to form a passage having a width that does not form choke between the inner wall and a side edge of a valve umbrella of an exhaust valve; and the exhaust valve configured such that a cross section of a head portion of the valve umbrella tapers from an outer peripheral edge of the valve umbrella toward a top of the valve umbrella.

In a case where the sizes of the supply valve and the exhaust valve are increased without changing the size of the cylinder in order to improve the supply and exhaust performance for the purpose of improving the performance of the internal combustion engine, the side surface of the valve umbrella of the exhaust valve gets close to the inner wall of the cylinder, and a narrow passage is formed between the side surface of the outer edge of the valve umbrella and the inner wall of the cylinder. When the high-temperature high-pressure gas in the cylinder flows through the narrow passage, a choke portion is formed in the vicinity of the entrance of the narrow passage. Even if the cylinder side of the choke portion is in the high-pressure state by the high-temperature combustion gas in the cylinder, the pressure lower than the pressure in the cylinder is just applied to the side surface of the valve umbrella, the side surface located downstream of the choke portion and facing the inner wall of the cylinder. The side surface of the valve umbrella other than the narrow passage on the cylinder wall side is substantially exposed in the cylinder, so that the pressure of the high-pressure combustion gas acts on this side surface. Therefore, the force toward the cylinder wall acts on the exhaust valve, and this causes the wobbling phenomenon.

Here, in the four-cycle internal combustion engine of the present invention, the distance from the side surface of the exhaust valve up to the cylinder wall is long, so that the narrow passage and the choke portion are not formed. Therefore, the high-pressure gas acts on most of the side surface of the valve umbrella of the exhaust valve, the side surface facing the cylinder wall surface. Thus, the force of pressing the valve umbrella toward the wall decreases, and the wobbling or vibration of the exhaust valve is less likely to be caused. On this account, the wear of the valve guide due to the wobbling and the like of the exhaust valve decreases, and the wear of the seat surface of the valve seat decreases. Thus, the lives of the engine parts are lengthened. It is preferable that the recess at the top portion of the inner wall of the cylinder be formed such that the gas passage formed between the recess and the side surface of the valve umbrella increases in width from the outer peripheral edge of the valve umbrella toward an inner portion side of the cylinder. In addition, it is preferable that the valve umbrella of the exhaust valve be formed in a tapered shape having an angle in a range from 10° to 80°, especially 20° to 40°.

Moreover, to solve the above problems, an exhaust valve of the present invention is an exhaust valve used in an internal combustion engine configured such that an inner wall of a combustion chamber and a side edge of a valve umbrella of the exhaust valve are close to each other, wherein a cross section of a head portion of the valve umbrella is formed in a truncated cone shape that tapers from an outer peripheral edge of the valve umbrella toward a top of the head portion of the valve umbrella such that a passage having a width that does not form choke between the inner wall of the combustion chamber and the side edge of the valve umbrella of the exhaust valve is formed. The exhaust valve of the present invention cooperates with the recess formed at the upper edge portion of the inner wall of the cylinder and forming a passage between the recess and the side edge of the valve umbrella of the exhaust valve so as not to cause the choke. With this, the wear of the valve guide of the exhaust valve decreases, and the wear of the seat surface of the valve seat decreases. Thus, the lives of the engine parts can be lengthened.

### Brief Description of Drawings

[Fig. 1] Fig. 1 is a partial cross-sectional view of a four-cycle internal combustion engine according to one embodiment of the present invention.
[Fig. 2] Fig. 2 is an arrangement plan view of the four-cycle internal combustion engine of the present embodiment.
[Figs. 3A and 3B] Figs. 3A and 3B are cross-sectional views for explaining effects of the four-cycle internal combustion engine of the present embodiment.
[Figs. 4A and 4B] Figs. 4A and 4B are graphs showing effects on the moment and vibratory force in the four-cycle internal combustion engine of the present embodiment.
[Figs. 5A to 5D] Figs. 5A to 5D are cross-sectional views showing the four-cycle internal combustion engines compared in the graphs of Figs. 4A and 4B.
[Figs. 6A and 6B] Figs. 6A and 6B are side views each showing the shape of a valve umbrella of an exhaust valve used in the present embodiment.
[Figs. 7A and 7B] Figs. 7A and 7B are side views showing examples of the shape of a recess of a top portion of a cylinder in the present embodiment.

### Description of Embodiments

In a four-cycle internal combustion engine, in order to increase a supply and exhaust speed or a supply and exhaust amount while maintaining the size of the cylinder, an exhaust valve and a supply valve are increased in size in some cases. However, it was found that in a case where the outer peripheral edge of a valve umbrella of each of the exhaust valve and the supply valve is close to the inner wall of a combustion chamber of a cylinder portion by the increase in size of these valves, a damage occurs at a specific position of a seat surface of a valve seat while the engine is running.

The damage unevenly occurs especially at a portion of the seat surface of the valve seat of the exhaust valve, the portion being located on the outer peripheral side of the combustion chamber. Therefore, the frequency of replacement of the valve seat of the exhaust valve needs to be increased, and the burdens of maintenance increase. The reason why the valve seat hit by not the supply valve but the exhaust valve tends to be damaged is because a high-pressure high-temperature combustion gas after explosion flows through the exhaust valve. In addition, the reason why a portion of the seat surface of the valve seat, the portion being close to the inner wall of the cylinder, tends to be damaged is because the valve umbrella oscillates in this direction.

The present invention provides a method of solving problems caused by increasing the sizes of the supply valve and exhaust valve with respect to the size of the cylinder for the purpose of improving the performance of the internal combustion engine, for example. The fact that specific problems occur when improving the performance of the internal combustion engine by the above way and the method of solving these problems are conventionally less well-known.

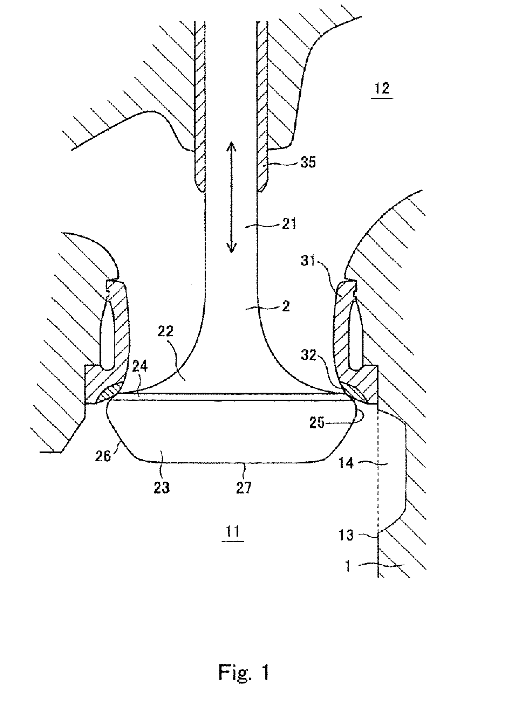

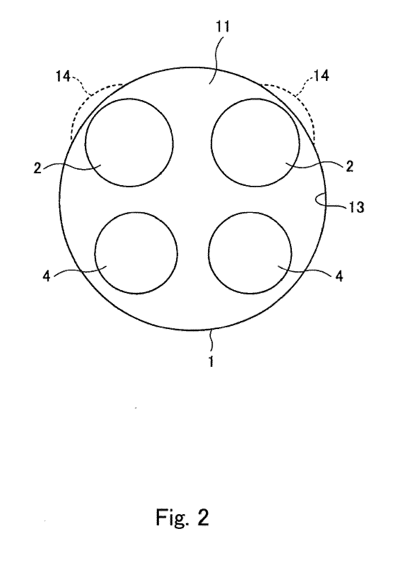

Hereinafter, an exhaust valve structure of the present invention will be explained in detail using an embodiment in reference to the drawings. Fig. 1 is a partial cross-sectional view of the exhaust valve structure according to one embodiment of the present invention. Fig. 2 is an arrangement plan view for explaining the positional relation among a cylinder, a supply valve, an exhaust valve, and a recess (depression) in the present embodiment. The exhaust valve structure of the present embodiment is applied to a four-cycle internal combustion engine, such as a gas engine or a diesel engine, including an exhaust valve 2 and a supply valve 4, and the features thereof are the shape of a head portion of a valve umbrella 22 of the exhaust valve 2 increased in size and a recess (depression) 14 provided on an upper end portion of an inner wall 13 of the cylinder. The other portions are the same as normal ones.

A valve rod 21 of the exhaust valve 2 is guided by a valve guide 35. The exhaust valve 2 reciprocates by the actions of a tappet and a valve spring, which are not shown. A seat surface 24 formed on the peripheral portion of the upper surface of the valve umbrella 22 contacts a seat surface 32 of a valve seat 31. Thus, the flow of the combustion gas is blocked. The exhaust valve 2 is closed during a supply stroke, a compression stroke, and a combustion stroke. When the valve rod 21 is pressed in the lower direction in Fig. 1 in the exhaust stroke and the exhaust valve 2 separates from the valve seat 31, the high-temperature high-pressure combustion gas in a combustion chamber 11 is discharged through an exhaust passage 12 to the outside. In a case where a plurality of exhaust valves 2 are provided, the exhaust passage 12 may be connected to an exhaust port of another exhaust valve. The exhaust valve 2 is configured such that during the operation thereof, the valve rod 21 rotates little by little while reciprocating. Thus, the wear of the seat surface 24 is uniformized, and the damages thereof are prevented. On this account, the replacement cycle of the exhaust valve 2 lengthens.

The exhaust valve structure of the present embodiment includes the exhaust valve 2 configured to reciprocate in the vicinity of the cylinder wall 13 of the internal combustion engine. The upper end portion of the cylinder wall 13 includes a recess (depression) 14 in a region where the valve umbrella 22 of the exhaust valve 2 reciprocates. By the recess 14, an outer peripheral edge 25 of the valve umbrella 22 reciprocates without interfering with the cylinder wall 13, and an adequately large clearance through which the combustion gas flows is formed between the outer side of a side edge 26 and the wall of the recess 14. A combustion chamber-side entrance of a gas passage formed at the clearance between the side edge 26 and the wall of the recess 14 is a large opening which does not cause choke. Especially, in order to cause the pressure of the high-pressure combustion gas to act on the side portion of the valve umbrella 22 of the exhaust valve 2 in the exhaust stroke, the side portion being close to the cylinder wall 13, the recess 14 of the present embodiment is formed such that the flow of the combustion gas at the exhaust valve 2 does not form a choke portion on the upstream side of the outer peripheral edge 25 of the valve umbrella 22.

A head portion 23 of the valve umbrella 22 of the exhaust valve 2 includes the side edge 26 having a conical shape. The head portion 23 is formed such that the cross section thereof tapers from the outer peripheral edge 25 of the valve umbrella 22 toward a top of the head portion 23. A top surface 27 perpendicular to the axis of the valve rod 21 is formed at the top.

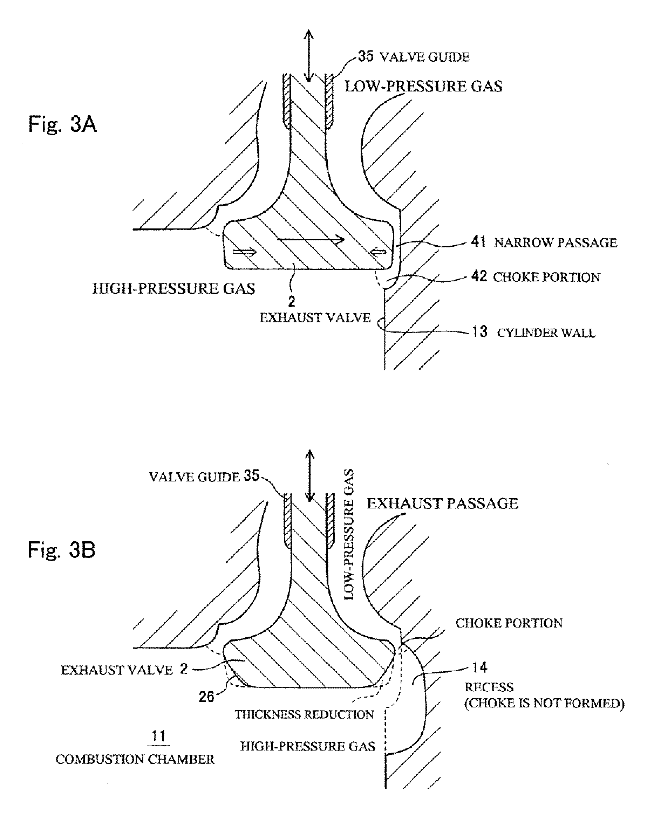

The exhaust valve structure of the present embodiment includes the recess 14 which is located on the wall (cylinder wall 13) of the cylinder 1 and is relatively large with respect to a narrow passage 41 (see Fig. 3A explained below). With this, a combustion gas passage near the wall has an adequate passage width, the pressure drop due to the flow of the gas along the side edge 26 is small, and the choke portion where the large pressure drop occurs is formed in the vicinity of the outer peripheral edge 25 of the valve umbrella. Therefore, the pressure of the high-pressure combustion gas in the combustion chamber 11 also acts on a portion of the side edge 26 of the valve umbrella 22, the portion being located near the wall. On this account, the pressure applied to the side edge 26 of the valve umbrella 22 is uniformized over the entire periphery. Thus, the moment of pressing the exhaust valve 2 toward the cylinder wall 13 does not become large.

If the taper angle of the side edge 26 is too large, the stiffness of the valve umbrella 22 becomes inadequate, and the seat surface 24 easily deforms. If the taper angle of the side edge 26 is too small, the pressure in the combustion chamber is less likely to be applied to the side edge 26 of the valve umbrella 22. Therefore, the taper angle of the side edge 26 is set in a range from 10° to 80°, especially from 20° to 40°. Although not shown, needless to say, the exhaust valve structure of the present embodiment is applicable to a gas engine configured such that a sub-combustion chamber is provided on a central axis of a ceiling of the combustion chamber 11.

Figs. 3A and 3B are diagrams for explaining the effects of the exhaust valve structure of the present embodiment while comparing with the prior art. Fig. 3A is a cross-sectional view showing the exhaust valve structure of the prior art. Fig. 3B is a cross-sectional view showing the exhaust valve structure according to the present embodiment. In each of Figs. 3A and 3B, the exhaust valve 2 is in an open state by moving in the lower direction from a closed position, and the combustion gas in the combustion chamber 11 flows out through between the exhaust valve 2 and the valve seat to the exhaust passage. A choke portion 42 is formed by the wall (cylinder wall 13) of the passage in which the exhaust valve 2 reciprocates and the side edge of the valve umbrella or by the cylinder wall 13 and the outer peripheral edge of the valve umbrella. The combustion gas flows up to the vicinity of the choke portion 42 while maintaining the pressure in the combustion chamber 11. The combustion gas flows through the choke portion 42 and is then significantly decreased in pressure to flow to the exhaust passage.

In the conventional exhaust valve structure shown in Fig. 3A, the side edge of the valve umbrella is formed in a cylindrical surface shape, and the narrow passage 41 is formed between the cylinder wall 13 and the side edge of the valve umbrella in a region where the side edge of the valve umbrella faces the cylinder wall 13. In addition, when the combustion gas flows out from the narrow passage 41, the choke portion 42 is formed at an end of the narrow passage 41, the end being located on the combustion chamber 11 side. The high pressure in the combustion chamber 11 does not act on a portion of the side edge of the valve umbrella, the portion being located downstream of the choke portion 42, but the decreased pressure of the gas having flowed through the choke portion 42 acts on the portion of the side edge of the valve umbrella. In a region other than the region where the side edge of the valve umbrella faces the cylinder wall 13, there is no wall facing the side edge of the valve umbrella, and most of the side edge of the valve umbrella is subjected to the high-pressure combustion gas. The present inventors have confirmed this phenomenon by estimating the pressure distribution around the exhaust valve by using CFD (Computational Fluid Dynamics).

As above, there is a pressure difference between high pressure acting on the side edge of the valve umbrella from the center side of the combustion chamber 11 toward the cylinder wall 13 and low pressure acting on the side edge of the valve umbrella from the cylinder wall 13 side toward the center. Therefore, the moment toward the cylinder wall 13 is generated at the exhaust valve 2, so that the exhaust valve 2 oscillates toward the cylinder wall 13. When the exhaust valve 2 in this posture contacts the valve seat, the exhaust valve 2 strongly hits a portion of the seat surface of the valve seat, the portion being close to the cylinder wall 13, and this portion wears quicker than the other portion. Therefore, the replacement cycle of the valve seat shortens, and the maintenance cost increases. The present inventors have formed an observation hole on the exhaust passage of a test engine and observed the movements of the valve rod of the exhaust valve by using a laser displacement gage. Thus, the present inventors have confirmed the occurrence of the wobbling of the valve rod during the exhaust stroke.

In contrast, according to the exhaust valve structure of the present embodiment shown in Fig. 3B, the top-side portion of the side edge 26 of the valve umbrella of the exhaust valve 2 is reduced in thickness, and the top-side portion of the side edge 26 is formed such that the cross section thereof is thickest at the outer peripheral edge 25 of the valve umbrella and tapers from the outer peripheral edge 25 toward the top. In addition, the recess (depression) 14 is formed on the upper edge portion of the cylinder wall 13 so as to be located in a region facing the side edge 26 of the valve umbrella. The gap formed between the wall of the recess 14 and the side edge 26 of the valve umbrella is formed such that the choke is not formed at the end portion located on the combustion chamber 11 side.

Therefore, while discharging the combustion gas, the high-pressure gas in the combustion chamber 11 acts on the side edge 26 facing the recess 14. Therefore, the moment based on the deviation of the pressure applied to the side edge 26 of the valve umbrella is small, and the oscillation movement of the exhaust valve 2 decreases. As above, by including the exhaust valve structure of the present embodiment, the local wear of the seat surface of the valve seat is prevented, and the life of the valve seat can be lengthened. In addition, since the vibration of the valve rod 21 decreases, the damages of the valve guide 35 can be prevented.

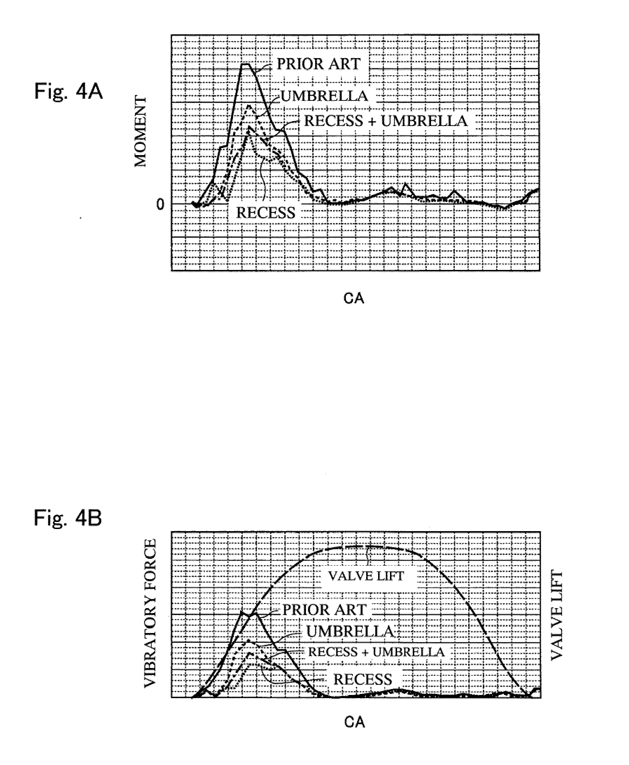

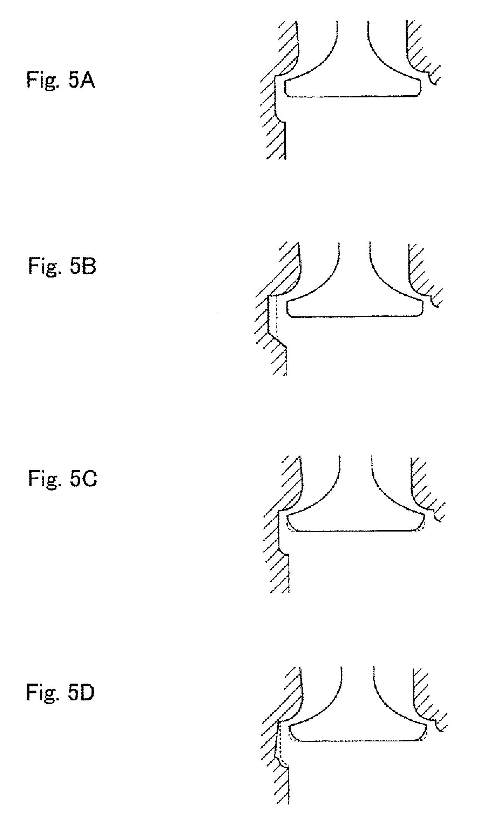

Figs. 4A and 4B are graphs showing effects of the exhaust valve structure of the present embodiment on the moment and vibratory force. Figs. 5A to 5D are schematic diagrams showing the structure by which the effects of Fig. 4 are obtained. Each of the graphs of Figs. 4A and 4B shows the changes in the moment or vibratory force with respect to a crank angle regarding a conventional structure (Fig. 5A),a structure (Fig. 5B) in which the recess is formed, a structure (Fig. 5C) in which the shape of the valve umbrella of the exhaust valve is a tapered shape, and a structure (Fig. 5D) in which the recess is formed and the shape of the valve umbrella is changed, which are shown in Figs. 5A to 5D. As shown in the drawings, the recess of Fig. 5B is larger than the recess of Fig. 5D.

Fig. 4A shows that the moment of the exhaust valve changes in accordance with the crank angle, the moment acting in such a direction that the valve umbrella and the cylinder wall are located closest to each other. As is clear from the graph of Fig. 4A, the region where the moment is large exists at a portion of the exhaust stroke. In addition, as is clear from the graph of Fig. 4A, the moment decreases by changing the shape of the valve umbrella as compared to the conventional structure, the moment further decreases by the combination of the change in the shape of the valve umbrella and the formation of the recess, and the moment significantly decreases by the use of the large recess.

Fig. 4B shows that the vibratory force of the exhaust valve changes in accordance with the crank angle, the vibratory force acting in such a direction that the valve umbrella and the cylinder wall are located closest to each other, and valve lift changes. As is clear from the graph of Fig. 4B, the vibratory force in the above-described direction increases in the exhaust stroke. In addition, as is clear from the graph of Fig. 4B, the vibratory force decreases by changing the shape of the valve umbrella as compared to the conventional structure, the vibratory force further decreases by the combination of the change in the shape of the valve umbrella and the formation of the recess, and the vibratory force significantly decreases by the use of the large recess.

As explained above in detail, the wobbling or vibration of the exhaust valve 2 is effectively suppressed by the change in the shape of the valve umbrella 22 of the exhaust valve 2 and the recess 14 formed at the upper end portion of the cylinder portion 1. Thus, the present inventors have invented the exhaust valve structure shown in Fig. 1.

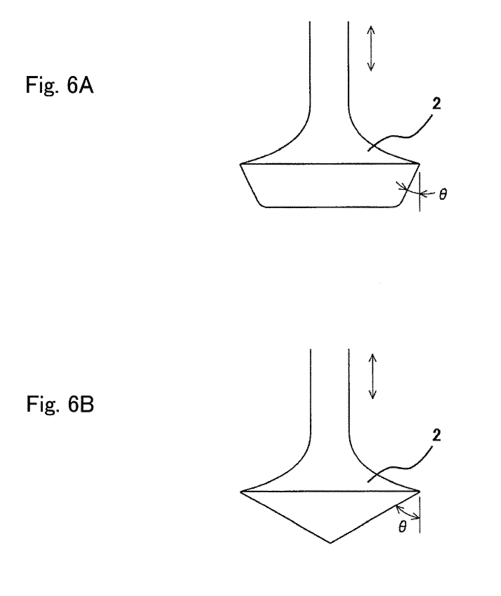

Figs. 6A and 6B are side views each showing an example of the shape of the valve umbrella of the exhaust valve used in the present embodiment. The exhaust valve used in the present embodiment is formed such that the cross section of a portion of the side portion, the portion being located on the top side, is thickest at the outer peripheral edge 25 of the valve umbrella and tapers from the outer peripheral edge 25 toward the top. The shape of the valve umbrella shown in Fig. 6A is a truncated cone shape having a taper angle θ. The shape of the valve umbrella shown in Fig. 6B is a conical shape having a taper angle θ and a vertex at the top of the valve umbrella. Regarding both the valve umbrella having the truncated cone shape and the valve umbrella having the conical shape, it is preferable that the taper angle θ be between 10° and 80°, especially between 20° and 40°. If the taper angle θ is larger than the above range, the peripheral portion of the valve umbrella becomes thin, and the strength thereof is not enough. Therefore, the peripheral portion of the valve umbrella may deform by the high temperature of the combustion gas or may bend by the pressure difference applied to the valve umbrella, and this may cause the contact failure at the seat portion. If the taper angle θ is smaller than the above range, the effect by the increase in the width of the narrow passage cannot be adequately obtained.

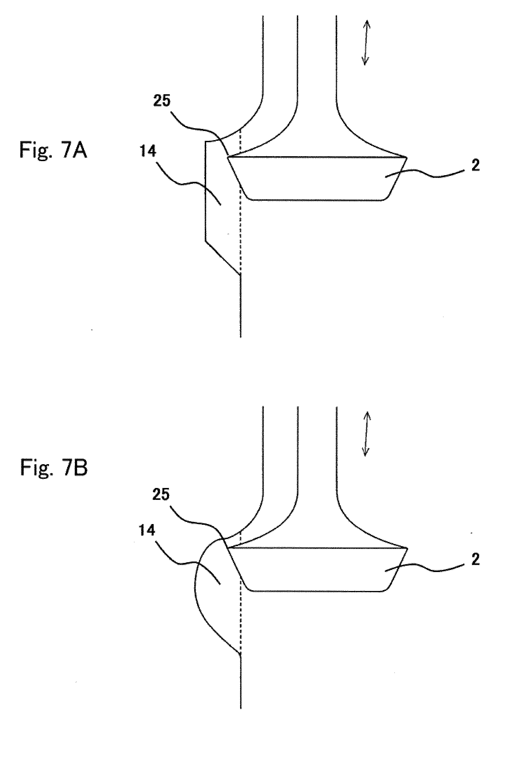

Figs. 7A and 7B are side views each showing an example of the shape of the recess of a top portion of the combustion chamber in the present embodiment. The recess 14 shown in Fig. 7A has such a cylindrical surface shape that a wall surface facing the outer edge of the valve umbrella is in parallel with the valve axis. In addition, the recess 14 shallows in a tapered shape at a lower portion where the exhaust valve 2 does not reach, and the lower portion meets the cylinder wall 13 of the combustion chamber. In a case where the taper angle of the lower portion of the recess 14 is smaller than the taper angle θ of the side surface of the valve umbrella of the exhaust valve, the side surface being located on the top side, the combustion gas passage between the wall of the recess 14 and the side edge of the valve umbrella increases in width as it extends in the lower direction. With this, since the high pressure of the combustion gas acts on the side edge of the valve umbrella at the recess portion, the advantage that the vibratory force and moment due to the pressure difference adequately decrease is obtained. Regarding the shape of the recess shown in Fig. 7B, the wall surface facing the outer edge of the valve umbrella is a curved surface. In the case of the recess 14 having the curved surface, the distance between the wall of the recess 14 and the outer peripheral edge 25 of the valve umbrella is adequately long. Therefore, the vibratory force and the moment are adequately weak.

In a case where the valve umbrella is further increased in size and the outer peripheral edge of the valve umbrella is larger than the inner wall of the cylinder, the recess having such a size that the valve seat can be pulled out from the cylinder while preventing the outer edge of the valve umbrella from contacting the inner wall of the cylinder is formed on the cylinder wall in order that the valve seat part can be pulled out in the direction of the valve axis for maintenance. In the recess which allows the valve seat part to be pulled out, a narrow clearance is formed between the wall of the recess and the side edge of the valve umbrella, and this inhibits the flow of the combustion gas. Therefore, even in this case, needless to say, the same effects as above can be obtained by including the recess by which the adequate clearance through which the combustion gas flows is formed on the outer side of the outer peripheral edge of the valve umbrella, the recess being formed at the upper end portion of the cylinder wall based on the technical idea of the present invention and by forming the head portion of the valve umbrella of the exhaust valve such that the cross section thereof tapers from the outer peripheral edge of the valve umbrella toward the top.

### Industrial Applicability

By using the exhaust valve structure of the present invention, the adequately large exhaust valve and supply valve are applied to the four-cycle internal combustion engine to increase the displacement of a diesel engine, a gas engine, or the like or shorten the exhaust time. Thus, the performance of the engine can be improved.

### Reference Signs List

1
- 1: cylinder portion
- 11: combustion chamber
- 12: exhaust passage
- 13: cylinder inner wall
- 14, 14A: recess (depression)
- 2: exhaust valve
- 21: valve rod
- 22: valve umbrella
- 23: head portion
- 24: exhaust valve seat portion
- 25: outer peripheral edge
- 26: side edge
- 27: top surface
- 31: valve seat
- 32: valve seat portion
- 35: valve guide
- 4: supply valve
- 41: narrow passage
- 42: choke portion

## Claims

1. A four-cycle internal combustion engine comprising:
a cylinder portion (1) configured such that a recess (14) is formed on an upper edge portion of an inner wall (13) of the cylinder portion (1), the recess (14) being formed by depressing the inner wall (13) so as to form a passage having a width that does not form choke between the inner wall (13) and a side edge (26) of a valve umbrella (22) of an exhaust valve (2); and
the exhaust valve (2) configured such that a cross section of a head portion (23) of the valve umbrella (22) tapers from an outer peripheral edge (25) of the valve umbrella (22) toward a top (27) of the valve umbrella (22).

2. The four-cycle internal combustion engine according to claim 1, wherein the recess (14) of the cylinder portion (1) is formed such that a gas passage formed between a side surface (26) of the valve umbrella (22) and a wall of the recess (14) increases in width from the outer peripheral edge (25) of the valve umbrella (22) toward an inner portion side of the cylinder portion (1) in a region where the exhaust valve (2) opens and closes.

3. The four-cycle internal combustion engine according to claim 1 or 2, wherein the valve umbrella (22) is formed in a tapered shape having an angle in a range from 20° to 40°.

4. An exhaust valve (2) used in an internal combustion engine configured such that an inner wall (13) of a combustion chamber (11) and a side edge (26) of a valve umbrella (22) of the exhaust valve (2) are close to each other, wherein
a cross section of a head portion (23) of the valve umbrella (22) is formed in a truncated cone shape that tapers from an outer peripheral edge (25) of the valve umbrella (22) toward a top (27) of the head portion (23) of the valve umbrella (22) such that a passage having a width that does not form choke between the inner wall (13) of the combustion chamber (11) and the side edge (26) of the valve umbrella (22) of the exhaust valve (2) is formed.

5. The exhaust valve (2) according to claim 4, wherein the valve umbrella (22) is formed in a tapered shape having an angle in a range from 20° to 40°.

## Patentansprüche

1. Viertakt-Verbrennungsmotor, umfassend:
einen Zylinderabschnitt (1), der so ausgebildet ist, dass eine Vertiefung (14) auf einem oberen Randbereich einer Innenwand (13) des Zylinderabschnitts (1) gebildet ist, wobei die Vertiefung (14) durch Eindrücken der Innenwand (13) gebildet ist, um einen Durchlass mit einer Breite zu bilden, die keine Drosselung zwischen der Innenwand (13) und einer Seitenkante (26) eines Ventilschirms (22) eines Auslassventils (2) bewirkt; und
das Auslassventil (2), das so ausgebildet ist, dass sich ein Querschnitt eines Kopfabschnitts (23) des Ventilschirms (22) von einer äußeren Umfangskante (25) des Ventilschirms (22) in Richtung einer Oberseite (27) des Ventilschirms (22) verjüngt.

2. Viertakt-Verbrennungsmotor nach Anspruch 1, wobei die Vertiefung (14) des Zylinderabschnitts (1) so ausgebildet ist, dass ein Gas-Durchlass, der zwischen einer Seitenfläche (26) des Ventilschirms (22) und einer Wand der Vertiefung (14) gebildet ist, von der äußeren Umfangskante (25) des Ventilschirms (22) in Richtung einer Innenteil-Seite des Zylinderabschnitts (1) in einem Bereich, in dem sich das Auslassventil (2) öffnet und schließt, in der Breite zunimmt.

3. Viertakt-Verbrennungsmotor nach Anspruch 1 oder 2, wobei der Ventilschirm (22) in kegelförmiger Form mit einem Winkel in einem Bereich von 20° bis 40° ausgebildet ist.

4. Auslassventil (2), das in einem Verbrennungsmotor verwendet wird und das so ausgebildet ist, dass eine Innenwand (13) einer Verbrennungskammer (11) und eine Seitenkante (26) eines Ventilschirms (22) des Auslassventils (2) nah beieinander sind, wobei
ein Querschnitt eines Kopfabschnitts (23) des Ventilschirms (22) in Form eines Kegelstumpfs ausgebildet ist, der sich von einer äußeren Umfangskante (25) des Ventilschirms (22) in Richtung einer Oberseite (27) des Kopfabschnitts (23) des Ventilschirms (22) verjüngt, so dass ein Durchlass mit einer Breite, die keine Drosselung zwischen der Innenwand (13) der Verbrennungskammer (11) und der Seitenkante (26) des Ventilschirms (22) des Auslassventils (2) bewirkt, gebildet ist.

5. Auslassventil (2) nach Anspruch 4, wobei der Ventilschirm (22) in kegelförmiger Form mit einem Winkel in einem Bereich von 20° bis 40° ausgebildet ist.

## Revendications

1. Moteur à combustion interne à quatre temps comprenant :
une partie cylindre (1) configurée de telle sorte qu'une cavité (14) soit formée sur une partie bord supérieur d'une paroi intérieure (13) de la partie cylindre (1), la cavité (14) étant formée en créant un renfoncement dans la paroi intérieure (13) de façon à former un passage présentant une largeur qui ne forme pas d'étranglement entre la paroi intérieure (13) et un bord latéral (26) d'une tulipe de soupape (22) d'une soupape d'échappement (2) ; et
la soupape d'échappement (2) configurée de telle sorte qu'une section transversale d'une partie tête (23) de la tulipe de soupape (22) rétrécisse d'un bord périphérique extérieur (25) de la tulipe de soupape (22) vers un sommet (27) de la tulipe de soupape (22).

2. Moteur à combustion interne à quatre temps selon la revendication 1, dans lequel la cavité (14) de la partie cylindre (1) est formée de telle sorte que la largeur d'un passage de gaz formé entre une surface latérale (26) de la tulipe de soupape (22) et une paroi de la cavité (14) augmente du bord périphérique extérieur (25) de la tulipe de soupape (22) vers un côté de partie intérieure de la partie cylindre (1) dans une région où la soupape d'échappement (2) s'ouvre et se ferme.

3. Moteur à combustion interne à quatre temps selon la revendication 1 ou 2, dans lequel la tulipe de soupape (22) est formée de façon à présenter une forme effilée présentant un angle situé dans une plage allant de 20° à 40°.

4. Soupape d'échappement (2) employée dans un moteur à combustion interne configuré de telle sorte qu'une paroi intérieure (13) d'une chambre de combustion (11) et un bord latéral (26) d'une tulipe de soupape (22) de la soupape d'échappement (2) se trouvent à proximité l'un de l'autre, dans laquelle
une section transversale d'une partie tête (23) de la tulipe de soupape (22) est formée de façon à présenter une forme tronconique qui rétrécit d'un bord périphérique extérieur (25) de la tulipe de soupape (22) vers un sommet (27) de la partie tête (23) de la tulipe de soupape (22) de telle sorte qu'un passage présentant une largeur qui ne forme pas d'étranglement entre la paroi intérieure (13) de la chambre de combustion (11) et le bord latéral (26) de la tulipe de soupape (22) de la soupape d'échappement (2) soit formé.

5. Soupape d'échappement (2) selon la revendication 4, dans laquelle la tulipe de soupape (22) est formée de façon à présenter une forme effilée présentant un angle situé dans une plage allant de 20° à 40°.
